Europäisches Patentamt

(19) European Patent Office

Office européen des brevets

(11) Numéro de publication : **0 018 243**
**B1**

## (12) FASCICULE DE BREVET EUROPÉEN

(45) Date de publication du fascicule du brevet :
09.06.82

(21) Numéro de dépôt : 80400321.8

(22) Date de dépôt : 12.03.80

(51) Int. Cl.³ : **F 16 D   3/20**

(54) **Perfectionnements aux joints universels coulissants, notamment pour transmissions de véhicules automobiles.**

(30) Priorité : 12.04.79 FR 7909277

(43) Date de publication de la demande :
29.10.80 (Bulletin 80/22)

(45) Mention de la délivrance du brevet :
09.06.82 Bulletin 82/23

(84) Etats contractants désignés :
DE GB IT

(56) Documents cités :
FR A 761 371
FR A 982 832
FR E 84 753
GB A 474 756
US A 3 494 244

(73) Titulaire : **SOCIETE ANONYME AUTOMOBILES
CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Dore, Jacques Pierre**
**191, rue Saint-Denis**
**F-92700 Colombes (FR)**

(74) Mandataire : **Masseron, Georges**
**CENTRE TECHNIQUE CITROEN Chemin Vicinal No 2**
**F-78140 Velizy-Villacoublay (FR)**

Imprimerie Jouve, 18, rue St-Denis, 75001 Paris, France

Perfectionnements aux joints universels coulissants notamment pour transmissions de véhicules automobiles

L'invention est relative aux joints universels coulissants, notamment pour transmissions de véhicules automobiles, comprenant un élément d'entraînement, sensiblement en forme de bol, lié à un arbre menant et présentant au moins deux chemins de roulement coopérant avec des galets montés par leur alésage sur des tourillons d'un moyeu solidaire d'un arbre mené, des moyens de retenue des galets sur leurs tourillons étant prévus.

Par le brevet français FR-A-982 832 on connaît un dispositif d'accouplement comportant des moyens de retenue des blocs pivotants sur leurs tourillons, mais ils sont destinés à empêcher tout coulissement axial des premiers sur les seconds.

L'invention a pour but de prévoir des organes de retenue permettant le maintien en place des galets sur les tourillons lors des manipulations, par exemple lors du montage, de manière à éviter toute gêne, voire une perte de temps, suite aux échappements des galets de leurs tourillons, facilités souvent par la présence d'une bague à faible coefficient de frottement ou d'un revêtement anti-friction sur l'alésage du galet, ces organes de retenue étant constitués de telle manière qu'ils ne suppriment pas la possibilité de coulissement des galets sur leurs tourillons lors du fonctionnement du joint.

Selon l'invention, un joint universel, du genre défini précédemment, est caractérisé par le fait que lesdits moyens de retenue sont munis d'éléments de friction permettant leur maintien en place d'une part à l'encontre des galets lors des manipulations et d'autre part à l'encontre de la force centrifuge qui s'exerce lors du fonctionnement du joint.

Les moyens de retenue peuvent être constitués par un capuchon plastique présentant d'une part une tête en appui sur le tourillon, de diamètre sensiblement supérieur au diamètre de l'alésage du galet et d'autre part une tige disposée dans une cavité cylindrique du tourillon et pourvue d'éléments de friction.

Selon un autre mode de réalisation, les moyens de retenue peuvent être constitués par une rondelle plate par exemple en métal de diamètre sensiblement supérieur au diamètre de l'alésage du galet et maintenue en appui sur le tourillon par un capuchon plastique comportant une tige disposée dans une cavité cylindrique du tourillon et munie d'éléments de friction.

De préférence, les susdits éléments de friction sont constitués, par une série de cônes superposés dont les grandes bases, tournées vers la tête du capuchon, ont un diamètre légèrement supérieur au diamètre de la cavité cylindrique du tourillon.

Selon un mode préféré de réalisation, une bague à faible coefficient de frottement est emmanchée serrée à l'intérieur de l'alésage du galet.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, montre un joint universel conforme à l'invention.

La figure 2 est une coupe suivant II-II de la figure 1.

La figure 3 est une vue en coupe d'une autre forme de réalisation.

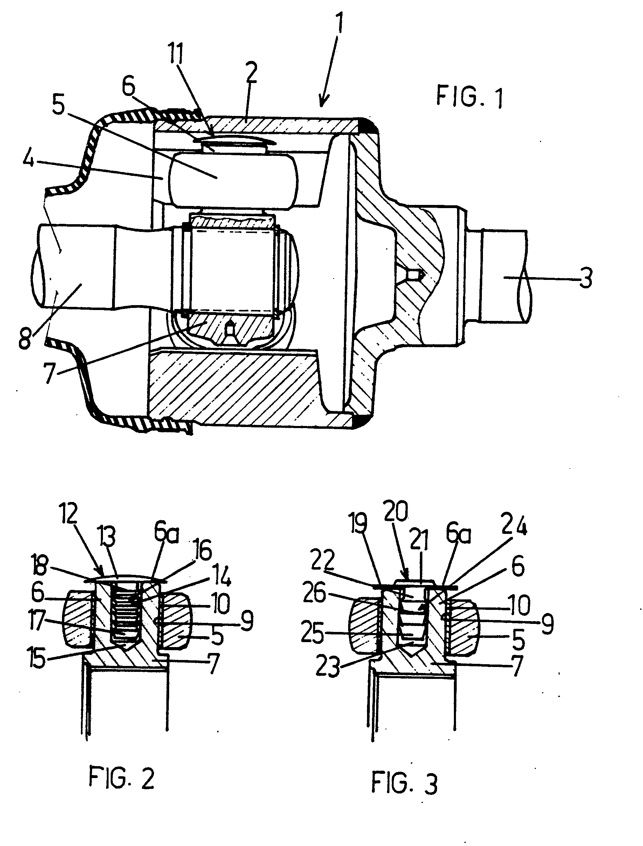

En se reportant aux dessins, et plus particulièrement à la figure 1, on peut voir un joint universel 1, du type tripode, pour transmission de véhicules automobiles. Ce joint comprend un élément d'entraînement 2 sensiblement en forme de bol, relié à un arbre menant 3 et muni de trois chemins de roulement 4, rectilignes, parallèles à l'axe du bol 2 et régulièrement espacés de 120°. Ces chemins de roulement sont propres à coopérer avec des galets 5 portés par des tourillons 6 d'un moyeu 7 solidaire d'un arbre mené 8. Dans l'alésage 8 (figure 2) des galets 5 peut être emmanchée serrée une bague 10 à faible coefficient de frottement. Des moyens de retenue 11 des galets 5 sont disposés à l'extrémité de chacun des tourillons 6.

A la figure 2, on voit un premier mode de réalisation de ces moyens de retenue 11 ; ils sont constitués par un capuchon plastique 12 comportant d'une part une tête 13 en appui sur la face 6a du tourillon 6 et de diamètre sensiblement supérieur au diamètre intérieur de la bague 10 à faible coefficient de frottement, et d'autre part une tige 14 disposée dans une cavité cylindrique 15 du tourillon 6. Cette tige 14 est munie d'éléments de friction 16 permettant de maintenir le capuchon en place sur le tourillon 6 à l'encontre du galet 5 lors des manipulations et également à l'encontre de la force centrifuge qui s'exerce lors du fonctionnement du joint.

Ces éléments de friction 16 sont constitués par une série de cônes 17 superposés, dont la grande base 18, tournée vers la tête du capuchon, a un diamètre sensiblement supérieur au diamètre de la cavité cylindrique 15 du tourillon 6.

La figure 3 représente un second mode de réalisation de ces moyens de retenue 11. Ils sont constitués par une rondelle 19 par exemple métallique, de diamètre sensiblement supérieur au diamètre intérieur de la bague 10 à faible coefficient de frottement. Cette rondelle 19 est maintenue en appui contre la face 6a du tourillon 6 par un capuchon plastique 20 comportant une tête 21 et une tige 22 disposée à l'intérieur d'une cavité cylindrique 23 du tourillon 6 et munie d'éléments de friction 24. Ces éléments de friction 24 permettent le maintien en place de la rondelle 19 et du capuchon 20 d'une part à l'encontre du galet 5 lors des manipulations et d'autre part à l'encontre de la force centrifuge qui s'exerce lors du fonctionnement du joint.

Ces moyens de friction 24 sont constitués par une série de grands cônes 25 superposés dont la grande base 26, tournée vers la tête 21 du capuchon 20, a un diamètre sensiblement supérieur au diamètre de la cavité cylindrique 23 du tourillon 6.

Selon un autre mode de réalisation, non représenté, la bague à faible coefficient de frottement 10 peut être supprimée. Il peut alors être prévu, soit un revêtement anti-friction sur l'alésage du galet 5, soit un contact acier sur acier. Dans ce cas le diamètre du capuchon plastique 12 ou de la rondelle métallique 19 sera sensiblement supérieur au diamètre de l'alésage du galet 5.

## Revendications

1. Joint universel coulissant, notamment pour transmission de véhicules automobiles, comprenant un élément d'entraînement (2) sensiblement en forme de bol, lié à un arbre menant (3) et présentant au moins deux chemins de roulement (4) coopérant avec des galets (5) montés par leur alésage (9) sur des tourillons (6) d'un moyeu (7) solidaire d'un arbre mené (8), des moyens de retenue (11) des galets sur leurs tourillons étant prévus, caractérisé en ce que lesdits moyens de retenue (11) sont munis d'éléments de friction (16, 24) permettant leur maintien en place d'une part à l'encontre des galets (5) lors des manipulations et d'autre part à l'encontre de la force centrifuge qui s'exerce lors du fonctionnement du joint.

2. Joint universel selon la revendication 1, caractérisé en ce que les moyens de retenue (11) sont constitués par un capuchon plastique (12) présentant d'une part une tête (13) en appui sur le tourillon (6) de diamètre sensiblement supérieur au diamètre de l'alésage du galet (5) et d'autre part une tige (14) disposée dans une cavité cylindrique (15) du tourillon (6) et munie d'éléments de friction (16).

3. Joint universel selon la revendication 1, caractérisé en ce que les moyens de retenue (11) sont constitués par une rondelle plate (19) de diamètre sensiblement supérieur au diamètre de l'alésage du galet (5) et maintenue en appui sur le tourillon (6) par un capuchon plastique (20) comportant une tige (22) disposée dans une cavité cylindrique (23) du tourillon (6) et munie d'éléments de friction (24).

4. Joint universel selon l'une quelconque des revendications 2 ou 3, caractérisé en ce que les éléments de friction (16, 24) sont constitués par une série de cônes (17, 25) superposés dont les grandes bases (18, 26), tournées vers la tête (13, 21) du capuchon, ont un diamètre légèrement supérieur au diamètre de la cavité cylindrique (15, 23) du tourillon (6).

5. Joint universel selon l'une quelconque des revendications précédentes, caractérisé en ce qu'une bague à faible coefficient de frottement est emmanchée serrée à l'intérieur de l'alésage du galet.

## Claims

1. Sliding universal joint, in particular for motor vehicle transmissions, comprising a drive element (2) substantially in the form of a bowl, coupled to a driving shaft (3) and having at least two bearing raceways (4) cooperating with rollers (5) mounted via their bore (9) on journals (6) of a hub (7) integral with a driven shaft (8), means (11) being provided for retaining the rollers on their journals, characterised in that the said retaining means (11) are equipped with friction elements (16, 24) enabling them to be maintained in position on the one hand against rollers (5) during manipulations, and on the other hand against the centrifugal force exerted during the operation of the joint.

2. Universal joint according to claim 1, characterised in that the retaining means (11) comprise a plastics cap (12) which on the one hand has a head (13) bearing on the journal (6) having a diameter substantially greater than the diameter of the bore of the roller (5) and on the other hand a rod (14) situated in a cylindrical cavity (15) of the journal (6) and provided with friction elements (16).

3. Universal joint according to claim 1, characterised in that the retaining means (11) comprise a flat disc or washer (19) having a diameter substantially greater than the diameter of the bore of the roller (5) and maintained bearing on the journal (6) via a plastics cap (20) comprising a rod (22) situated in a cylindrical cavity (23) of the journal (6) and provided with friction elements (24).

4. Universal joint according to claim 2 or 3, characterised in that the friction elements (16, 24) are formed by a series of superposed cones (17, 25) of which the large bases (18, 26) facing towards the head (13, 21) of the cap have a diameter slightly greater than the diameter of the cylindrical cavity (15, 23) of the journal (6).

5. Universal joint according to any one of the preceding claims, characterised in that a ring having a low coefficient of friction is inserted with a tight fit within the bore of the roller.

## Ansprüche

1. Verschiebbares Kardangelenk, insbesondere für den Antrieb von Kraftfahrzeugen, mit einem im wesentlichen glockenförmigen Antriebselement (2), das mit einer antreibenden Welle (3) verbunden ist und wenigstens zwei Rollbahnen (4) aufweist, die mit Rollen (5) zusammenarbeiten, die mit ihrer Bohrung (9) auf Drehzapfen (6) einer mit einer angetriebenen Welle (8) fest verbundenen Nabe (7) gelagert sind, wobei eine Rückhalteeinrichtung (11) zur Rückhaltung der Rollen auf ihren Drehzapfen vorgesehen ist, dadurch gekennzeichnet, dass die Rückhalteeinrichtung (11) mit Reibelementen (16, 24) versehen ist, die die Rückhalteeinrichtung (11) einerseits gegenüber den Rollen (5) bei der Handhabung

und andererseits gegen die beim Betrieb des Gelenks auftretenden Zentrifugalkräfte an ihrem Platz halten.

2. Kardangelenk nach Anspruch 1, dadurch gekennzeichnet, dass die Rückhalteeinrichtung (11) aus einer Kunststoffkappe (12) besteht mit einerseits einem Kopf (13) zur Anlage am Drehzapfen (6), dessen Durchmesser deutlich grösser als der Durchmesser der Bohrung der Rolle (5) ist, und andererseits einem Stab (14), der in einem zylindrischen Hohlraum (15) des Drehzapfens (6) angeordnet und mit Reibelementen (16) versehen ist.

3. Kardangelenk nach Anspruch 1, dadurch gekennzeichnet, dass die Rückhalteeinrichtung (11) aus einer flachen Scheibe (19) besteht, deren Durchmesser deutlich grösser als der Durchmesser der Bohrung der Rolle (5) ist und in Anlage an den Drehzapfen (6) durch eine Kunststoffkappe (20) mit einem Stab (22) gehalten wird, der in einem zylindrischen Hohlraum (23) des Drehzapfens (6) angeordnet und mit Reibelementen (24) versehen ist.

4. Kardangelenk nach Anspruch 2 oder 3, dadurch gekennzeichnet, dass die Reibelemente (16, 24) aus einer Reihe von übereinanderliegenden Kegeln (15, 25) bestehen, deren zum Kopf (13, 21) der Kappe gewandte grosse Basen (18, 26) einen Durchmesser haben, der geringfügig grösser als der Durchmesser des zylindrischen Hohlraums (15, 23) des Drehzapfens ist.

5. Kardangelenk nach einem der vorhergehenden Ansprüche, dadurch gekennzeichnet, dass ein Ring mit geringem Reibungskoeffizient innerhalb der Bohrung der Rolle mit Preßsitz eingesetzt ist.

FIG. 1

FIG. 2

FIG. 3